# EUROPÄISCHE PATENTSCHRIFT

(11) **EP 0 637 559 B1**
(45) Veröffentlichungstag und Bekanntmachung des Hinweises auf die Patenterteilung: **04.06.1997**
(21) Anmeldenummer: 94111211.2
(22) Anmeldetag: 19.07.1994
(51) Int. Cl.: B65G 27/30

(54) **Vibrations-Linear-Förderer**
Linear vibratory conveyor
Convoyeur linéaire à vibrations

(30) Priorität: 04.08.1993 DE 4326146
(43) Veröffentlichungstag der Anmeldung: 08.02.1995
(73) Patentinhaber: Josef Köberlein Maschinen- und Vorrichtungsbau, 97631 Bad Königshofen (DE)
(72) Erfinder: Demar, Adelbert, D-97633 Grossbardorf (DE); Ebner, Wolfgang, D-97633 Saal/Saale (DE); Meinfelder, Horst, D-98646 Seidingstadt (DE); Köberlein, Josef, D-97631 Bad Königshofen (DE)
(74) Vertreter: Rau, Manfred, Dr. Dipl.-Ing.

(56) Entgegenhaltungen:
- EP-A- 0 288 699
- DE-A- 2 510 292
- DE-A- 4 123 776
- DE-A- 4 138 957
- DE-B- 1 025 801
- DE-C- 884 626
- FR-A- 2 050 234
- GB-A- 2 238 840

## Beschreibung

Die Erfindung betrifft einen Vibrations-Linear-Förderer nach dem Oberbegriff des Anspruches 1. Bei derartigen Vibrations-Linear-Förderern handelt es sich um Schwingförderer, die einzelne Werkstücke insgesamt geradlinig fördern.

Aus der DE-A-25 10 292 ist ein Vibrations-Linear-Förderer der gattungsgemäßen Art bekannt der eine Förderrinne aufweist, die über Blattfedern auf einer Grundplatte abgestützt ist. Es ist eine Gegenmasse vorgesehen, die ebenfalls über Blattfedern auf der Grundplatte abgestützt ist. An der Grundplatte ist ein Exzenterantrieb angebracht, der über eine Schubstange die Förderrinne und über eine weitere Schubstange die Gegenmasse antreibt. Hierdurch wird eine Zwangskopplung der Förderrinne und der Gegenmasse erzeugt. Hierdurch werden zwar die Massenkräfte kompensiert, aber nicht die auftretenden Momente. Ein ruhiger Lauf ist hiermit daher nicht erreichbar.

Aus der DD-A-257 737 A3 ist ein Vibrations-Linear-Förderer zum Transport von Werkstücken bekannt und zwar insbesondere zum Transport von Werkstücken relativ kleiner Dimensionen, die in automatisch arbeitenden Fertigungs- oder Montageanlagen einer bestimmten Arbeitsstelle zugeführt werden sollen. Hierbei ist eine Nutzmasse vorhanden, die aus einem Schwinggehäuse sowie einem Elektromagnet-Anker und einer Förder- und Speicherrinne gebildet ist. Es ist weiterhin eine annähernd gleich große Gegenschwingmasse aus einem im Schwinggehäuse angeordneten Schwingrahmen sowie einem Elektromagnet-Kern vorgesehen. Die Masseschwerpunkte dieser beiden Massen befinden sich auf einer Wirklinie des Schwingantriebes. Zur Befestigung der schwingenden Teile an einer Grundplatte dienen geschlitzt ausgeführte, schräg angeordnete Blattfedern, an denen sowohl das Schwinggehäuse als auch der Schwingungsrahmen an vorgegebenen Stellen festgeschraubt werden. Die Schwingantrieb hat eine parallel zur Schwing-Förderrinne verlaufende Schwingachse. Die Blattfedern sind gegenüber dem Schwinggehäuse einerseits und dem Schwingungsrahmen andererseits um einen Winkel geneigt angeordnet. Diese Maßnahmen dienen dazu, einen verbesserten störungsfrei funktionierenden Vibrations-Linear-Förderer zu schaffen, bei dem insbesondere keine Fundamenterregungen mehr auftreten sollen. Bei unterschiedlichen Fördergeschwindigkeiten ist dieses Ziel nicht erreichbar.

Aus der DE-A-41 38 957 ist eine hinsichtlich des grundsätzlichen Aufbaus gleicher Vibrations-Längs-Förderer bekannt.

Der Erfindung liegt die Aufgabe zugrunde, einen Vibrations-Linear-Förderer so auszugestalten, daß er bei allen Fördergeschwindigkeiten ruhig läuft.

Diese Aufgabe wird erfindungsgemäß durch die Merkmale im Anspruch 1 gelöst. Durch die erfindungsgemäßen Maßnahmen wird erreicht, daß das im wesentlichen aus den beiden schwingenden Massen bestehende Gesamtsystem nicht nur kräftefrei, sondern auch drehmomentfrei arbeitet, so daß keinerlei Kräfte auf die Grundplatte bzw. eine Fundamentplatte ausgeübt werden. Dies führt zu einem sehr ruhigen Lauf bei allen Fördergeschwindigkeiten. Dieser Effekt wird durch die Maßnahmen nach Anspruch 2 noch weiter verbessert.

Anspruch 3 gibt eine Ausgestaltung für eine Koppel wieder, wobei Anspruch 4 eine Ausgestaltung wiedergibt, die verschleißfrei und wartungsfrei ist, so daß keine Schmierung erforderlich ist. Derartige im Anspruch 4 angegebenen Vorrichtungen sind als Maschinenelemente bekannt, und zwar beispielsweise von der Firma Rosta-Werk AG in CH-5502 Hunzenschwil.

Die Ausgestaltung des Schwingantriebes nach den Ansprüchen 5 bis 7 ermöglicht eine stufenlose Regelung der Fördergeschwindigkeit zwischen 0 und einer hohen Fördergeschwindigkeit von beispielsweise 15 m/min.

Die Weiterbildung nach Anspruch 9 hat zur Folge, daß die Blattfedern keinem Verschleiß unterliegen, da sie an ihren Befestigungsstellen nicht geschwächt sind.

Die Einsparung der Blattfedern und die Ausrichtung und die Erregung des Schwingantriebes sind jeweils auch unabhängig von der Koppel einsetzbar.

Weitere Einzelheiten, Vorteile und Merkmale der Erfindung ergeben sich aus der nachfolgenden Beschreibung eines Ausführungsbeispieles anhand der Zeichnung. Es zeigt
- Fig. 1: einen Vibrations-Linear-Förderer in Seiten-Längs-Ansicht mit abgenommenen Seitenwänden,
- Fig. 2: eine Seiten-Stirn-Ansicht des Vibrations-Längs-Förderer entsprechend dem Sichtpfeil II in Fig. 1 bei abgenommener Stirnwand, in teilweise geschnittener Darstellung,
- Fig. 3: eine Befestigung einer Blattfeder in Seitenansicht,
- Fig. 4: eine Draufsicht auf die Befestigung der Blattfeder gemäß dem Sichtpfeil IV in Fig. 3,
- Fig. 5: eine Befestigung eines Trimmgewichtes an einer Vibrations-Schiene in Seitenansicht,
- Fig. 6: eine Koppel in Seitenansicht,
- Fig. 7: eine Draufsicht auf die Koppel gemäß dem Sichtpfeil VII in Fig. 6 und
- Fig. 8: eine vergrößerte Seiten-Längs-Darstellung eines Schwingantriebes.

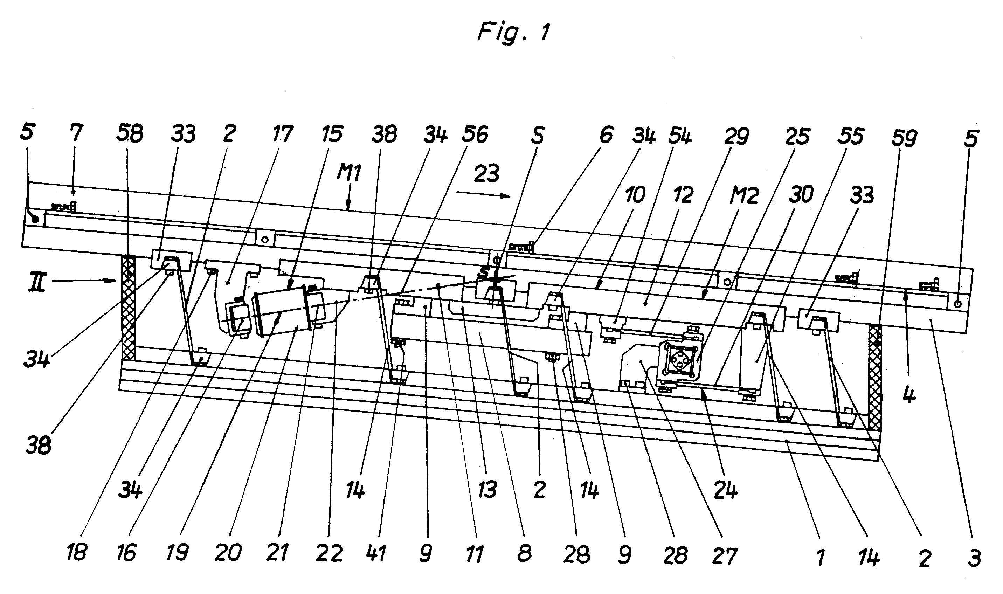

Der Grundaufbau eines Vibrations-Linear-Förderers, der nachfolgend der Einfachheit halber als Schwingförderer bezeichnet wird, ergibt sich aus Fig. 1. Auf einer Basisplatte 1 ist mittels Federelementen 2 eine Schwingschiene 3 abgestützt. Auf der Schwingschiene 3 ist eine Schwing-Förderbahn 4 mittels Schrauben 5 auswechselbar angebracht. Auf dieser Schwing-Förderbahn 4 werden Werkstücke 6 gefördert, bei denen es sich im dargestellten Ausführungsbeispiel um Schrauben handelt. Die Schwing-Förderbahn 4 kann in ihrer Form so ausgebildet sein, daß sie auf die Werkstücke 6 einen Ausrichteffekt ausübt. Im vorliegenden Fall dient hierzu eine Seitenwange 7 an der Schwing-Förderbahn 4.

Etwa in der Längsmitte der Schwingschiene 3 ist an deren Unterseite ein Trimmgewicht 8 befestigt, dessen Lage mittels Distanzstücken 9 deutlich unterhalb der Schwingschiene 3 ist.

Unterhalb der Schwingschiene 3 und diese teilweise seitlich umgebend ist eine Gegenmasse 10 angeordnet, die nicht mit der Schwingschiene 3 verbunden ist. Die Gegenmasse 10 besteht aus zwei Teil-Gegenmassen 11, 12, die in Längsrichtung der Schwingschiene 3 hintereinander angeordnet und mittels eines Verbindungssteges 13 miteinander verbunden sind. Diese Gegenmasse 10 ist ebenfalls über mit den Federelementen 2 gleichartige Federelemente 14 gegenüber der Basisplatte 1 abgestützt.

Zwischen der Schwingschiene 3 und der Gegenmasse 10 ist ein elektromagnetischer Schwingantrieb 15 angeordnet. Ein Anker 16 des Schwingantriebes 15 ist an einem Ankerhalter 17 angebracht, der wiederum mittels Befestigungsschrauben 18 an der Unterseite der Schwingschiene 3 befestigt ist. Ein Schwingmagnet 19 des Schwingantriebes 15 weist eine Magnetspule 20 auf, in der ein Weicheisenkern 21 angeordnet ist. Der Schwingmagnet 19 ist über einen Schwingmagnet-Halter 22 an der Teil-Gegenmasse 11 der Gegenmasse 10 befestigt. Da die Gegenmasse 10 und insbesondere ihre Teil-Gegenmasse 11 nur einen äußerst kleinen Luftspalt zur Schwingschiene 3 bildet, wird der Magnetpfad zwischen dem Anker 16 und dem Schwingmagnet 19 über den Schwingmagnet-Halter 22, die Teil-Gegenmasse 11, die Schwingschiene 3 und den Ankerhalter 17 des Ankers 16 geschlossen.

Während der Schwingantrieb 15 - bezogen auf die Förderrichtung 23 des Schwingförderers - oberhalb des Trimmgewichtes 8 angeordnet ist, ist unterhalb des Trimmgewichtes 8 eine Koppel 24 vorgesehen, die ein Koppelgehäuse 25 aufweist, das Drehschwingungen um eine quer zur Förderrichtung 23 und horizontal verlaufende Achse 26 ausführen kann. Das Koppelgehäuse 25 ist hierzu an einem Koppelhalter 27 gelagert, der mittels Befestigungsschrauben 28 mit der Basisplatte 1 unmittelbar oder mittelbar verbunden ist. Das Koppelgehäuse 25 ist mittels parallel zur Förderrichtung 23 verlaufender Koppelstangen 29, 30 einerseits mit der Gegenmasse 10 und andererseits mit der Schwingschiene 3 verbunden, so daß diese zwangsweise immer - bezogen auf die Förderrichtung 23 - gegeneinander schwingen.

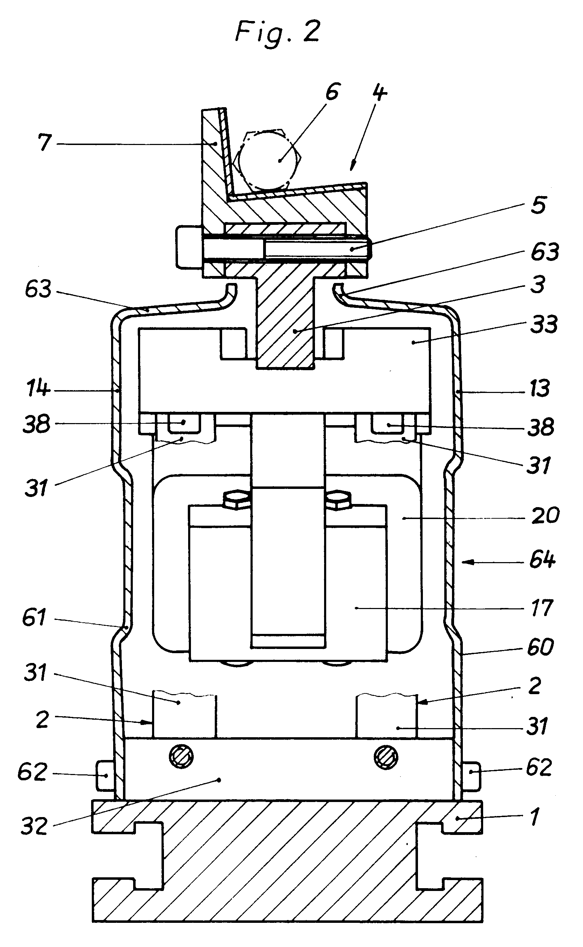

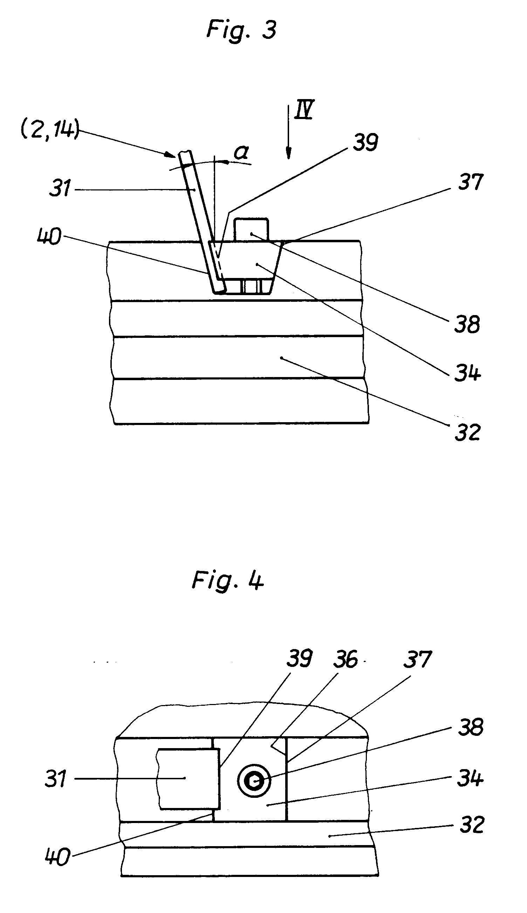

Die Federelemente 2 und 14 sind in Länge, Querschnitt und Material gleich ausgebildet und durch Blattfedern 31 gebildet. Diese Blattfedern 31 sind jeweils mit ihrem unteren Ende mit einer Grundplatte 32 verbunden, die wiederum an der Basisplatte 1 angebracht ist. Mit ihrem jeweils oberen Ende sind die Blattfedern 31 entweder mit einem mit der Schwingschiene 3 verbundenen Halter 33 bzw. mit der Gegenmasse 10 verbunden. In allen Fällen erfolgt die Verbindung der Blattfedern 31 mittels eines Spannkeils 34, der in einer trapezförmigen Ausnehmung 35 in der Grundplatte 32 bzw. einem Halter 33 bzw. der Gegenmasse 10 angeordnet ist. Jeder Spannkeil 34 stützt sich mit einer Führungsfläche 36 gegen eine Anlagefläche 37 der Ausnehmung 35 ab. Mittels einer Spannschraube 38 ist der Spannkeil 34 auf der Anlagefläche 37 der Ausnehmung 35 verschiebbar, so daß eine der Führungsfläche 36 gegenüberliegende Druckfläche 39 des Spannkeils 34 ihren Abstand zu einer zugeordneten Klemmfläche 40 der Ausnehmung 35 verändert. Zwischen dieser Druckfläche 39 des Spannkeils 34 und der Klemmfläche 40 der Ausnehmung 35 wird das jeweilige Ende der Blattfeder 31 eingeklemmt. Wie in Fig. 2 angedeutet ist, sind jeweils in einer Ebene quer zur Förderrichtung 23 zwei Blattfedern 31 im Abstand voneinander angeordnet, so daß einerseits die Schwingschiene 3 und andererseits die Gegenmasse 10 seitenstabil gehalten sind. Die Ausgestaltung der Einspannung der Blattfedern 31 ergibt sich aus den Fig. 3, 4, 5 und 8. Wie den Fig. 1 und 3 entnehmbar ist, sind alle Blattfedern 31 der Federelemente 2 und 14 parallel zueinander angeordnet und gegenüber der Grundplatte 32 bzw. der Schwingschiene 3 bzw. der Gegenmasse 10 um einen Winkel a geneigt, für den gilt 11° ≤ a ≤ 17°, wobei der Winkel a bevorzugt etwa 14° ist.

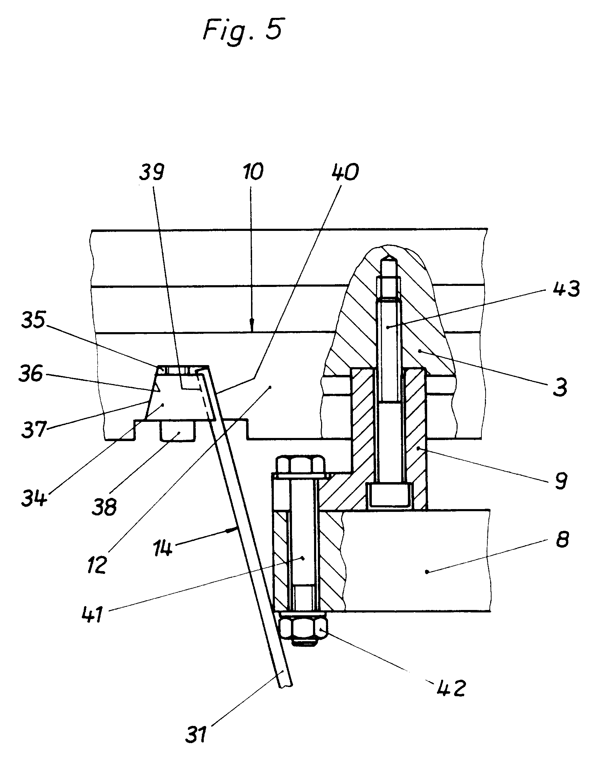

Einzelheiten der Befestigung des Trimmgewichtes 8 an der Schwingschiene 3 ergeben sich aus Fig. 5, wo auch die Befestigung einer Blattfeder 31 eines Federelementes 14 an der Teil-Gegenmasse 12 der Gegenmasse 10 dargestellt ist. Hiernach ist das Trimmgewicht 8 mittels Halteschrauben 41 und Muttern 42 am darüberliegenden Distanzstück 9 befestigt. Dieses ist wiederum mittels Schrauben 43 an der Schwingschiene 3 befestigt. Wie sich aus Fig. 5 ergibt, kann das Trimmgewicht 8 sehr leicht gegen ein Trimmgewicht 8 anderen Gewichts ausgewechselt werden, wobei auch durch Austausch der Distanzstücke 9 der Abstand zur Schwingschiene 3 verändert werden kann.

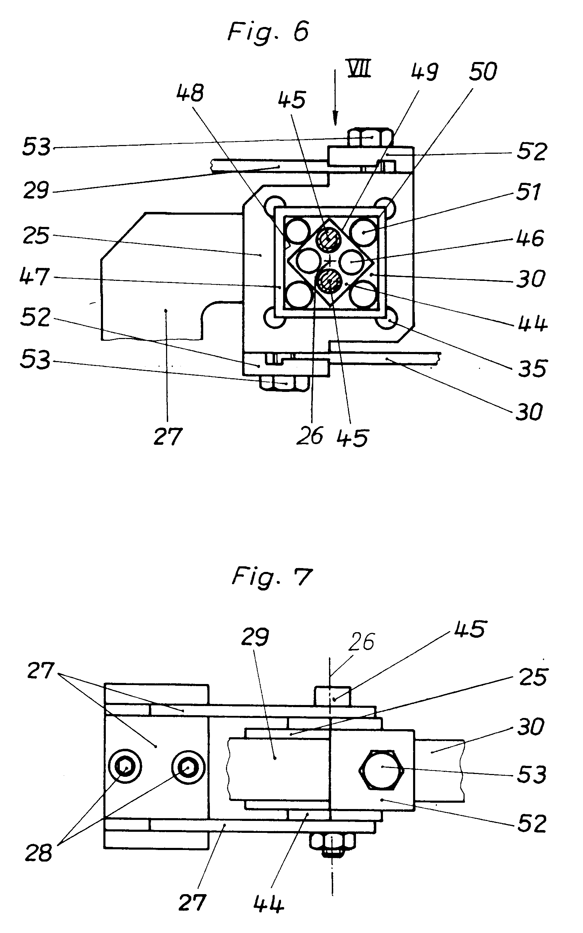

Die Einzelheiten der Koppel 24 ergeben sich aus den Fig. 6 und 7. Am Koppelhalter 27 ist ein im Außenquerschnitt quadratisches Widerlager 44 mittels Verbindungsschrauben 45 angebracht, wobei das Widerlager 44 und die Verbindungsschrauben 45 parallel zur Achse 26 der Koppel 24 verlaufen. Das Widerlager 44 ist mit Bohrungen 46 teilweise hohl ausgebildet. Das im Querschnitt quadratische Widerlager 44 wird von einem Mantel 47 des Koppelgehäuses 25 umgeben, der einen quadratischen Innenquerschnitt aufweist und ebenfalls parallel zur Achse 26 ausgerichtet ist. Die Innenseiten 48 des Mantels 47 haben eine geringfügig größere Erstreckung als die Diagonale des Widerlagers 44. Widerlager 44 und Mantel 47 sind um 45° gegenüber der Achse 26 gegeneinander verdreht, so daß die Außenseiten 49 des Widerlagers 44 jeweils den Innenecken 50 des Mantels 47 zugewandt sind. In den Innenecken 50 sind Druck-Federelemente 51 aus elastisch verformbarem Material, vorzugsweise Gummi, angeordnet, die eine zylindrische Form aufweisen können. Sie stützen sich einerseits gegen die Innenseiten 48 des Mantels 47 im Bereich seiner Innenecken 50 und andererseits gegen die Außenseiten 49 des Widerlagers 44 und zwar jeweils in deren mittleren Bereich, ab. Bei Verschwenkungen des Koppelgehäuses 25 um die Achse 26 gegenüber dem ortsfesten Widerlager 44 werden die Druck-Federelemente 51 verformt und üben zum einen eine Rückstellkraft auf das Koppelgehäuse 25 in Richtung seiner in Fig. 6 dargestellten Ruhelage aus. Zum anderen dämpfen die Druck-Federelemente 51 aufgrund der ausgeprägten Dämpfungseigenschaften von Gummi diese Bewegung. Die Koppelstangen 29, 30 sind jeweils mittels eines Klemmstücks 52 und einer Klemmschraube 53 mit dem Koppelgehäuse 25 verbunden. Sie sind mittels gleichartiger Verbindungen mit Widerlager-Böcken 54, 55 verbunden, die einerseits an der Gegenmasse 10 und andererseits an der Schwingschiene 3 befesigt sind. Die Ausgestaltung der Koppel 24 bewirkt nicht nur eine Zwangskopplung von Schwingschiene 3 und Gegenmasse 10, sondern führt auch zu einer annähernd geräusch- und verschleißfreien Kopplung.

Die Schwingschiene 3 mit Haltern 33, die Schwing-Förderbahn 4 mit dem Trimmgewicht 8 einschließlich der Distanzstücke 9, der Anker 16 mit Ankerhalter 17 und die Werkstücke 6 bilden eine schwingende Masse M1. Eine andere schwingende Masse M2 wird im wesentlichen gebildet durch die Gegenmasse 10 und den an ihr angebrachten Schwingmagnet 19 mit Schwingmagnet-Halter 22. Kleinere Teile und die Befestigungen der Blattfedern 2, 14 wurden hierbei vernachlässigt. Die Schwerpunkte der beiden Massen M1 und M2 fallen im wesentlichen in einem einzigen gemeinsamen Schwerpunkt S zusammen, der in der Schwingachse 56 des Schwingantriebes 15 liegt. Das angenäherte Zusammenfallen der beiden Schwerpunkte der Massen M1 und M2 in einem gemeinsamen Schwerpunkt S wird durch die Abhängung des Trimmgewichtes 8 erreicht. Da die mit der Mittelachse des Schwingantriebes 15 zusammenfallende Schwingachse 56 durch den gemeinsamen Schwerpunkt S geht, sind einerseits die Summe aller auf die Massen M1 und M2 wirkenden Kräfte und andererseits die Summe aller auf die Massen M1 und M2 wirkenden Drehmomente 0. Das durch die gegeneinander schwingenden Massen M1 und M2 gebildete Schwingsystem ist also ein geschlossenes, nach außen kräfte- und drehmomentfreies System. Es ist nach außen daher völlig ruhig; es neigt nicht zum Hüpfen, übt keine Kräfte über die Basisplatte 1 auf den Untergrund aus und erzeugt insoweit auch keine Geräusche. Dies wird noch dadurch gefördert, daß die Richtung der Blattfedern 31 senkrecht zur Richtung der Schwingachse 56 verläuft, d.h. die Blattfedern 2 und 14 werden in ihren oberen Bereichen in Richtung der Schwingachse 56 ausgelenkt.

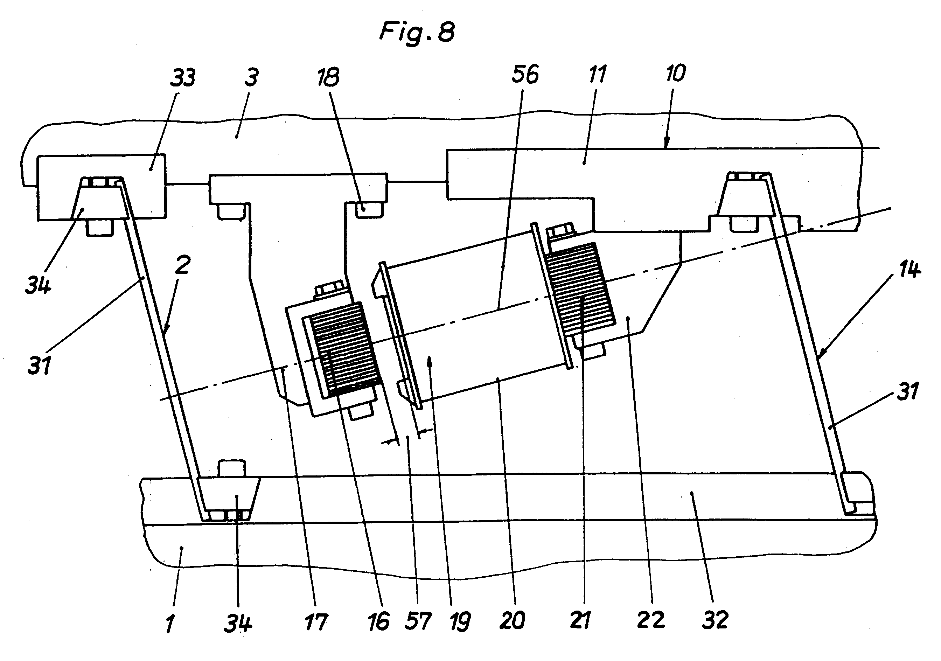

Der Schwingantrieb 15 wird mittels einer getakteten Rechteck-Gleichspannung erregt. Da der Antrieb mittels einer getakteten Gleichspannung erfolgt, tritt keine Erwärmung der Magnetspule 20 in den Erregungspausen keine Energieverluste und somit keine Erwärmung der Magnetspule 2o auf, so daß ein großer Luftspalt 57 von beispielsweise 5 mm (s. Fig. 8) zwischen Anker 16 und Schwingmagnet 19 möglich ist. Da die Massen M1 und M2 gegeneinander schwingen, sich also aufeinander zu oder voneinander weg bewegen, ist ein Förderschritt für ein Werkstück 6 maximal gleich der halben Schwingweite. Durch Veränderung der Frequenz der zur Erregung des Schwingantriebes 15 dienenden Gleichspannung ist eine stufenlose Regelung der Fördergeschwindigkeit im Bereich von 0 bis 15 m/min für die Werkstücke 6 möglich, wozu ein Frequenzwandler eingesetzt wird. Die Frequenz der von diesem gelieferten Spannung bestimmt die erzwungene Frequenz der Schwingung des Schwingförderers. Durch die Koppel 24 wird erreicht, daß ohne Änderungen der Federelemente 2 und 14 alle Anwendungsfälle abgedeckt sind. Die Koppel 24 erzwingt ein gegensinniges Schwingen der Massen M1 und M2 nicht nur im Resonanzfall des jeweiligen schwingenden Systems, sondern auch in allen anderen Frequenzbereichen. Wie Fig. 1 entnehmbar ist, ist jede schwingende Masse M1 und M2 über drei Paare von Federelementen 2 bzw. 14 mit der Grundplatte 32 verbunden. Aufgrund der Einspannung der Blattfedern 31 müssen diese an ihren Befestigungsstellen nicht durch Löcher oder dergleichen geschwächt werden; sie sind also ebenfalls nicht verschleißgefährdet.

Wie Fig. 1 erkennen läßt, wird der Schwing-Förderer normalerweise in Förderrichtung 23 geneigt angeordnet, was allerdings in Fig. 1 stark übertrieben dargestellt ist.

Der Vollständigkeit halber sei darauf verwiesen, daß der Schwingförderer an seinen beiden Stirnseiten mit abnehmbaren Stirnwänden 58, 59 versehen ist. An seinen Längsseiten ist er - wie Fig. 2 entnehmbar ist - mit Seitenwänden 60, 61 versehen, die mittels Schrauben 62 an der Grundplatte 32 befestigt sind. Sie übergreifen mit oberen nach innen gezogenen Abschnitten 63 die an der Vibrationsschiene 3 angebrachten Halter 33 für die Blattfedern 31 und untergreifen die Schwing-Förderbahn 4, so daß von dieser herabfallender Schmutz nicht in das Innere des Schwingförderers, also in das durch die Stirnwände 58, 59 und die Seitenwände 60, 61 begrenzte Gehäuse 64 gelangen kann.

## Patentansprüche

1. Vibrations-Linear-Förderer mit
einer Grundplatte (32),
einer Schwing-Förderbahn (4) mit einer ersten schwingenden Masse (M1), zwischen der Grundplatte (32) und der Schwing-Förderbahn (4) angeordneten Federelementen (2),
einer Gegenmasse (10), die wesentlich eine zweite schwingende Masse (M2) bestimmt,
zwischen der Grundplatte (32) und der Gegenmasse (10) angeordneten Federelementen (14),
einem mit der ersten Masse (M1) einerseits und der zweiten Masse (M2) andererseits angreifenden Schwingantrieb (15), und
einer zwischen der ersten schwingenden Masse (M1) und der zweiten schwingenden Masse (M2) angreifenden, eine gegensinnige Schwingung erzwingenden Koppel (24),
dadurch gekennzeichnet,
daß ein mit der Schwing-Förderbahn (4) verbundenes und von dieser abgehängtes Trimmgewicht (8) wesentlich die erste schwingende Masse (M1) bestimmt und
daß die Schwingachse (56) des Schwingantriebes (15) angenähert durch einen gemeinsamen Massenschwerpunkt (S) der ersten schwingenden Masse (M1) und der zweiten schwingenden Masse (M2) gerichtet ist.

2. Vibrations-Linear-Förderer nach Anspruch 1, dadurch gekennzeichnet, daß die Schwingachse (56) des Schwingantriebes (15) etwa parallel zur Auslenkrichtung der Federelemente (2, 14) verläuft.

3. Vibrations-Linear-Förderer nach Anspruch 1 oder 2, dadurch gekennzeichnet, daß die Koppel (24) ein um eine relativ zur Grundplatte (32) ortsfeste Achse (26) drehschwingbares Koppelgehäuse (25) aufweist, das über jeweils eine Koppelstange (29, 30) mit der ersten schwingenden Masse (M1) und der zweiten schwingenden Masse (M2) verbunden ist.

4. Vibrations-Linear-Förderer nach Anspruch 3, dadurch gekennzeichnet, daß das Koppelgehäuse (25) gegenüber einem gegenüber der Grundplatte (32) ortsfesten Widerlager (44) elastisch gedämpft und drehschwingungsfähig gelagert ist.

5. Vibrations-Linear-Förderer nach einem der Ansprüche 1 bis 4, dadurch gekennzeichnet, daß der Schwingantrieb (15) als elektromagnetisch wirkender Antrieb ausgebildet ist.

6. Vibrations-Linear-Förderer nach Anspruch 5, dadurch gekennzeichnet, daß der Schwingantrieb (15) mit getakteter Gleichspannung erregbar ist.

7. Vibrations-Linear-Förderer nach Anspruch 6, dadurch gekennzeichnet, daß die Gleichspannung mittels eines Frequenzwandlers regelbar ist.

8. Vibrations-Linear-Förderer nach einem der Ansprüche 1 bis 7, dadurch gekennzeichnet, daß die Federelemente (2, 14) durch untereinander gleiche Blattfedern (31) gebildet sind.

9. Vibrations-Linear-Förderer nach Anspruch 8, dadurch gekennzeichnet, daß die Blattfedern (31) an ihren Enden einen ungeschwächten Querschnitt aufweisen und einerseits mit der Grundplatte 32 und andererseits mit der ersten schwingenden Masse (M1) und andererseits mit der zweiten schwingenden Masse (M2) mittels einer Spanneinrichtung verbunden sind.

## Claims

1. A linear vibratory conveyor comprising:
a bottom plate (32),
a vibrating conveyor track (4) having a first vibrating mass (M1), spring elements (2) disposed between the bottom plate (32) and the vibrating conveyor track (4),
a countermass (10) substantially determining another vibrating mass (M2), spring elements (14) arranged between the bottom plate (32) and the countermass (10),
a vibratory drive (15) engaging with the one mass (M1) on the one hand and with the other mass (M2) on the other hand, and
a coupler (24) engaging between the first vibrating mass (M1) and the second vibrating mass (M2) and enforcing reciprocal vibration,
characterized in that
a trimming weight (8) linked to, and suspended from, the vibrating conveyor track (4) substantially determines the first vibrating mass (M1), and
in that the axis (56) of vibration of the vibratory drive (15) is directed approximately through a common center of gravity (S) of the first vibrating mass (M1) and the second vibrating mass (M2).

2. A linear vibratory conveyor according to claim 1, characterized in that the axis (56) of vibration of the vibratory drive (15) extends about parallel to the direction of deflection of the spring elements (2, 14).

3. A linear vibratory conveyor according to one of claims 1 to 2, characterized in that the coupler (24) has a coupler case (25) torsionally vibratable about a stationary axis (26) in relation to the bottom plate (32) and linked to the first vibrating mass (M1) and the second vibrating mass (M2) by way of a connecting rod (29, 30) in each case.

4. A linear vibratory conveyor according to claim 3, characterized in that the coupler case (25), in a manner vibratable and elastically damped, is supported towards an abutment (44) which is stationary in relation to the bottom plate (32).

5. A linear vibratory conveyor according to one of claims 1 to 4, characterized in that the vibratory drive (15) is configured as a drive acting electromagnetically.

6. A linear vibratory conveyor according to claim 5, characterized in that the vibratory drive (15) is excitable by a cycled d.c. voltage.

7. A linear vibratory conveyor according to claim 6, characterized in that the d.c. voltage is adjustable by a frequency transformer.

8. A linear vibratory conveyor according to one of claims 1 to 7, characterized in that the spring elements (2, 14) are formed by leaf springs (31) that are alike to one another.

9. A linear vibratory conveyor according to claim 8, characterized in that the leaf springs (31) have their full cross-sectional area at their ends and are linked with the bottom plate (32) on the one hand and with the first vibrating mass (M1) on the other hand and with the second vibrating mass (M2) on the other hand by means of a clamping equipment.

## Revendications

1. Convoyeur linéaire à vibrations, comprenant
une plaque d'embase (32),
une piste (4) de convoyage par vibrations, présentant une première masse oscillante (M1),
des éléments élastiques (2) interposés entre la plaque d'embase (32) et la piste (4) de convoyage par vibrations,
une masse antagoniste (10) déterminant, pour l'essentiel, une seconde masse oscillante (M2),
des éléments élastiques (14) interposés entre la plaque d'embase (32) et la masse antagoniste (10),
un entraînement oscillant (15) en prise, d'une part, avec la première masse (M1) et, d'autre part, avec la seconde masse (M2), et
une biellette (24) en prise entre la première masse oscillante (M1) et la seconde masse oscillante (M2), et imposant une oscillation en sens inverse,
caractérisé par le fait
qu'un contrepoids (8), relié à la piste (4) de convoyage par vibrations et suspendu par cette dernière, détermine pour l'essentiel la première masse oscillante (M1) ; et
que l'axe oscillatoire (56) de l'entraînement oscillant (15) croise approximativement un centre commun de masse (S) de la première masse oscillante (M1) et de la seconde masse oscillante (M2).

2. Convoyeur linéaire à vibrations selon la revendication 1, caractérisé par le fait que l'axe oscillatoire (56) de l'entraînement oscillant (15) s'étend à peu prés parallèlement à la direction d'excursion des éléments élastiques (2, 14).

3. Convoyeur linéaire à vibrations selon la revendication 1 ou 2, caractérisé par le fait que la biellette (24) comporte un boîtier d'accouplement (25) qui peut accomplir des oscillations tournantes autour d'un axe (26) fixe par rapport à la plaque d'embase (32) et est relié, par l'intermédiaire d'une tige respective d'accouplement (29, 30), à la première masse oscillante (M1) et à la seconde masse oscillante (M2).

4. Convoyeur linéaire à vibrations selon la revendication 3, caractérisé par le fait que le boîtier d'accouplement (25) est monté, avec amortissement élastique et avec faculté d'oscillation tournante, par rapport à une contre-butée (44) fixe vis-à-vis de la plaque d'embase (32).

5. Convoyeur linéaire à vibrations selon l'une des revendications 1 à 4, caractérisé par le fait que l'entraînement oscillant (15) est réalisé sous la forme d'un entraînement agissant électromagnétiquement.

6. Convoyeur linéaire à vibrations selon la revendication 5, caractérisé par le fait que l'entraînement oscillant (15) peut être excité par une tension continue rythmée.

7. Convoyeur linéaire à vibrations selon la revendication 6, caractérisé par le fait que la tension continue peut être réglée au moyen d'un convertisseur de fréquences.

8. Convoyeur linéaire à vibrations selon l'une des revendications 1 à 7, caractérisé par le fait que les éléments élastiques (2, 14) sont formés par des lames de ressort (31) identiques entre elles.

9. Convoyeur linéaire à vibrations selon la revendication 8, caractérisé par le fait que les lames de ressort (31) présentent une section transversale non affaiblie à leurs extrémités et sont reliées, au moyen d'un dispositif de serrage, d'une part à la plaque d'embase (32) et, d'autre part, à la première masse oscillante (M1) et à la seconde masse oscillante (M2).
